# EUROPEAN PATENT APPLICATION

(11) **EP 1 734 350 A1**
(43) Date of publication of application: **20.12.2006**
(21) Application number: 06115065.2
(22) Date of filing: 07.06.2006
(51) Int. Cl.: G01J 1/42, G01K 17/00

(54) **Device for detecting optical parameters of a laser beam.**

(30) Priority: 13.06.2005 IT MI20051090
(71) Applicant: LASER POINT s.r.l., 20090 Vimodrone (MI) (IT)
(72) Inventor: Argenti, Luigi, 20132 MILANO (IT)
(74) Representative: Mittler, Enrico

(57) **Abstract**

The present invention describes a device for the detection of optical parameters of a laser beam; the device comprises a sensitive element (1) for intercepting the incident laser beam and thermosensitive elements (2, 3) which are capable of converting a temperature variation into an electric signal. The device comprises a first plurality (2) of said thermosensitive elements placed substantially at a first distance (A) from the geometric centre (D) of said sensitive element (1) and a second plurality (3) of said thermosensitive elements placed substantially at a second distance (B) from the geometric centre (D) of the sensitive element (1); the second distance (B) being greater than the first distance (A).

## Description

The present invention refers to a device for detecting optical parameters of a laser beam.

Laser sources are widely used in numerous fields: industrial, scientific, medical, etc.

In the several applications of laser sources it is necessary to measure the power of the laser beam. Devices for detecting the average power of a laser beam are generally known; said devices comprise a sensitive element for transforming the optical incident power of the laser beam into an electric signal to measure.

Among detecting devices those comprising a semiconductor element used as photosensitive element exist. The photons constituting the laser beam strike the semiconductor element which, absorbing them, generates an electric signal.

Other detecting devices are based on the calorimetric principle; a laser beam that incises on an absorbing material within the detecting device determines its heating. Said heating is measured by means of traditional temperature measurers, such as the thermopiles, applied to the absorbing element on the surface opposite to that struck by the laser beam; the temperature variation is transformed into a voltage or current variation.

The detecting device to be used depends on the type of laser source and on its power. Normally for high power laser beams thermopile detecting devices are used, even though said devices are not as fast as and less sensitive than a semiconductor device, but they are suitable for measuring completely a power laser beam because they are able to support high photon flows.

A laser beam detecting device is described in the Italian patent No. 01290576. Said device comprises a plurality of first sensitive elements in the form of a disk suitable for intercepting a substantially central portion of an incident laser beam and another plurality of second sensitive elements in the form of a disk suitable for intercepting an annular portion of the laser beam external to the central portion. The incident laser beam on the sensitive elements is fractioned in various parts, each one incident on a respective sensitive element. In this manner, by processing the electric signals coming from the sensitive elements, it is possible to assess simultaneously the time course of the average power of the laser beam, of the position of its barycentre, of its profile and of its diameter.

Said detecting device is complex to construct given that it also comprises a cooling circuit that provides also for thermally insulating the first and the second sensitive elements.

In view of the state of the technique, object of the present invention is to provide a device for detecting optical parameters of a laser beam that is constructed more simply than that of the known types.

In accordance with the present invention, said object is achieved by means of a device for detecting optical parameters of a laser beam, said device comprising a sensitive element for intercepting the incident laser beam and thermosensitive elements that are capable of converting a variation of the temperature into an electric signal, characterised in that it comprises a first plurality of said thermosensitive elements placed substantially at a first distance from the geometric centre of said sensitive element and a second plurality of said thermosensitive elements placed substantially at a second distance from the geometric centre of the sensitive element, said second distance being greater than said first distance.

Thanks to the present invention it is possible to produce a device for the detection of optical parameters of a laser beam that is of easy construction and is economically advantageous.

The characteristics and advantages of the present invention will appear evident from the following detailed description of an embodiment thereof, illustrated as non-limiting example in the attached drawings, in which:
Figure 1 is a plan view of the device for detecting optical parameters of a laser beam according to the present invention;
Figure 2 is a transversal section view of the device of Figure 1;
Figures 3 and 4 are the diagrams of the isotherms of the device of Figure 1 on which a laser beam with a diameter of 10 and 40 millimetres incises respectively;
Figure 5 is a diagram of the trend of the diameter of the laser beam correlated with the ratio of the electric signals coming from the two pluralities of thermosensitive elements.

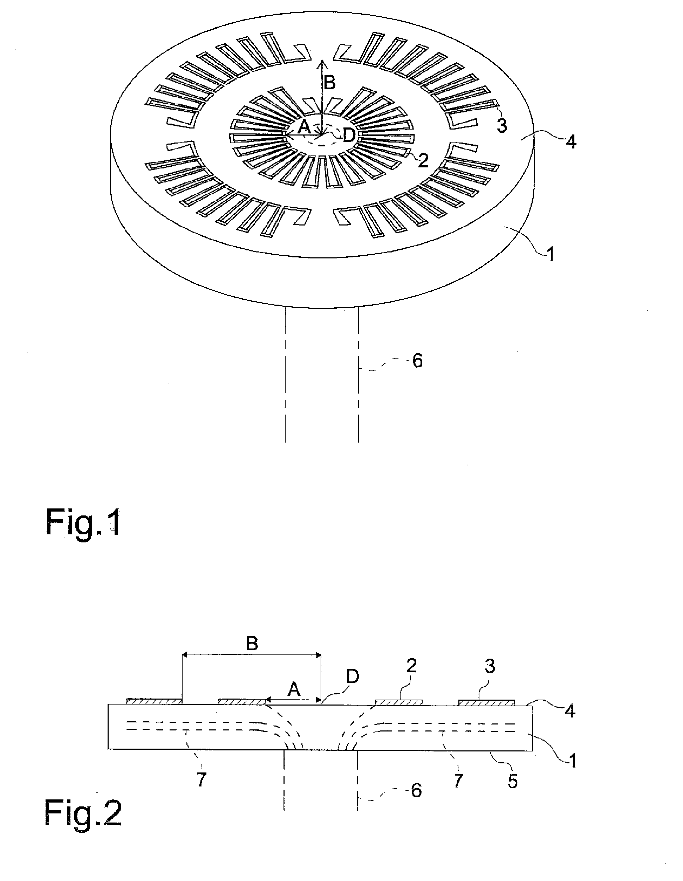

With reference to Figures 1 and 2 a device for the detection of optical parameters of a laser beam according to the present invention is shown. Said device comprises an element 1 made of a material absorbing the laser radiation and having finite thermal conductivity, a first 2 and a second 3 pluralities of elements sensitive to the temperature placed on the surface of said element 1; said thermosensitive elements are capable of converting a temperature variation into an electric signal.

The sensitive element 1 comprises a central portion suitable for intercepting the laser beam 6 or a central portion of the laser beam 6. The first plurality 2 of said thermosensitive elements is placed substantially at a first distance A from the geometric centre D of said sensitive element 1 and the second plurality 3 of said thermo sensitive elements is placed substantially at a second distance B from the geometric centre D of the sensitive element 1; the second distance B is greater than the first distance A.

Preferably said sensitive element has a disk shape and the pluralities 2 and 3 of thermosensitive elements are placed in a circular crown shape having respective preset radial distances A and B from the geometric centre D of the sensitive element 1.

Preferably the two crowns 2 and 3 of thermosensitive elements are placed on the same surface 4 opposite to the surface 5 on which the laser beam 6 incises. Nevertheless, in accordance with a variant to the embodiment of the present invention, it is also possible for one or both the pluralities 2 and 3 of thermosensitive elements to be placed on the surface 4 of the sensitive element 1, that is the surface on which the laser beam 6 incises.

The laser beam 6 that incises on the surface 5 of the sensitive element 1 is absorbed by the latter and this causes local heating of the sensitive element 1 and a heat flow that migrates from the zone of the element 1 interested by the laser beam to the periphery of the element 1; said heat flow is indicated by the flow lines 7 drawn in Figure 2. Said heat flow is measured by the pluralities 2 and 3 of thermosensitive elements.

The lines of heat flow 7 will have a curvilinear form in the zone concerned by the laser beam 6 and near the first plurality 2 of thermosensitive elements and a substantially straight-lined form and parallel to the surface 4 of the sensitive element 1, in the zone furthest away from that interested by the beam and near the second plurality 3 of thermosensitive elements.

The thermosensitive elements can be constituted by thermopiles or also by differential thermocouples.

The element 1 can comprise in addition to a layer suitable for absorbing the laser radiation also a layer of ceramic or other material that does not conduct electricity. According to an embodiment variant of the element 1, it can comprise in sequence a layer suitable for absorbing the laser radiation, a metallic layer and an insulating layer.

The thermosensitive elements belonging to each of the crowns 2 and 3 can be connected electrically or can be electrically independent from each other.

With such detecting device it is possible to carry out measurements of power, of barycentre of the intensity of the laser beam and of the diameter of the same laser beam.

The measurement of the power is carried out by summing the signals of each of the pluralities 2 or 3 of thermosensitive elements; preferably the measurement of the power is carried out by summing the signals of only the plurality 3 of thermosensitive elements given that the heat flow lines are of rectilinear form in the zone of the sensitive element 1.

The measurement of the barycentre of the intensity of the laser beam 6 is carried out by assessing the electric signal generated by each thermosensitive element belonging to the plurality 3 that is preferably subdivided into four series of independent elements. If the intensity of the laser beam is not coaxial with the crowns 2 and 3 of thermosensitive elements, the electric signals generated by each of the four series of thermosensitive elements of the plurality 3 will be different from each other and the overall of the electric signals generated will permit the determination of the position of the barycentre of the incident laser beam. By moving the laser beam 6 relatively to the device, that is to the crown 3, so as to make the electric signals generated by the four series of thermosensitive elements of the crown 3 equalised, the position of the barycentre of the incident laser beam 6 can be made coaxial with the geometric axis of the sensitive element 1 that passes through its geometric centre D.

If the intensity of the laser beam 6 is coaxial with the crowns 2 and 3, that is it passes through the geometric centre D of the sensitive element 1, the measurement of the diameter of the laser beam is carried out by means of the ratio between the sum of the electric signals deriving from the plurality 2 of thermo sensitive elements and the sum of the electric signals deriving from the plurality 3 of thermosensitive elements. In fact if the incident laser beam is coaxial to the crowns of thermosensitive elements and the thickness of the sensitive element 1 is suitably sized, that is so as to have curvilinear flow lines 7 near the crown 2 and straight flow lines 7 near the crown 3, the signal of the plurality 2 of thermosensitive elements will be different from the signal deriving from the plurality 3 of thermosensitive elements and both electric signals will be correlated with the diameter of the laser beam 6.

The measurement of the diameter of the laser beam 6 is carried out with greater precision if the laser beam is concentric to the crowns 2 and 3 of thermosensitive elements. Preferably the crown 3 of thermo sensitive elements is formed by at least four thermosensitive elements independent from each other so as to be able to assess the real position of the laser beam and to be able to make it coaxial by means of the relative alignment.

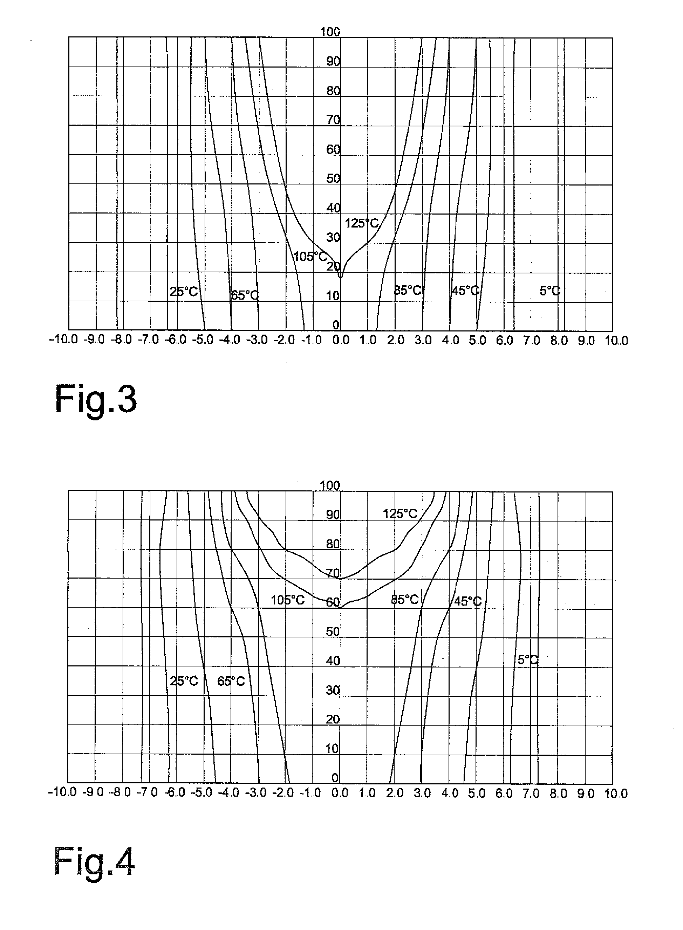

Figure 3 shows a diagram of the isotherms at the temperatures of between 5 and 125 degrees relative to a laser beam of 10 millimetres in diameter and having a power of 5kW that incises on the sensitive element 1 of the device according to the invention; the sensitive element 1 is made with a copper sheet 25 millimetres thick and 134 millimetres in diameter and with values A=13mm and B=47mm.

Figure 4 shows a diagram of the isotherms at the temperatures of between 5 and 125 degrees relative to a laser beam of 40 millimetres in diameter and having a power of 5kW that incises on the sensitive element 1 of the device according to the invention; the sensitive element 1 is made with a copper sheet 25 millimetres thick and 134 millimetres in diameter and with values A=13mm and B=47mm.

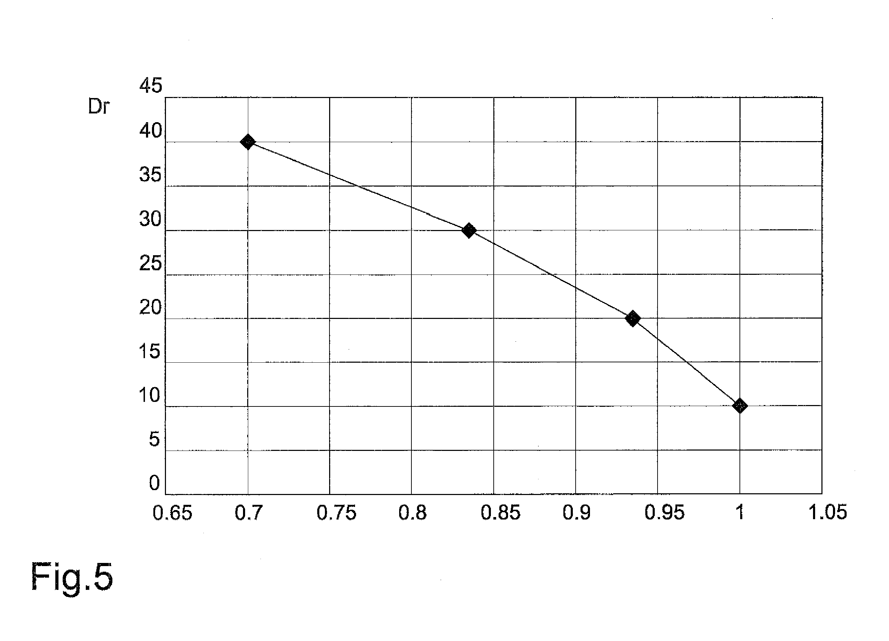

Figure 5 shows a graph that correlates the course of the diameter of the laser beam 6 with the ratio between the electric signals coming from the pluralities 2 and 3 of thermosensitive elements for a laser beam having a power of 5kW; the sensitive element 1 is again made with a copper sheet 25 millimetres thick and 134 millimetres in diameter and with values A=13mm and B=47mm.

## Claims

1. Device for the detection of optical parameters of a laser beam, said device comprising a sensitive element (1) for intercepting the incident laser beam and thermosensitive elements (2, 3) which are capable of converting a temperature variation into an electric signal, **characterised in that** it comprises a first plurality (2) of said thermosensitive elements placed substantially at a first distance (A) from the geometric centre (D) of said sensitive element (1) and a second plurality (3) of said thermosensitive elements placed substantially at a second distance (B) from the geometric centre (D) of the sensitive element (1), said second distance (B) being greater than said first distance (A).

2. Device according to claim 1, **characterised in that** said first (2) and second (3) plurality of thermosensitive elements are placed on the surface (4) of said sensitive element (1) opposite to the surface (5) that intercepts said laser beam (6).

3. Device according to claim 1, **characterised in that** one between said first (2) and second (3) plurality of thermosensitive elements is placed on the surface (5) of said sensitive element (1) on which the laser beam (6) incises.

4. Device according to any of the previous claims, **characterised in that** said first (2) and second (3) plurality of thermosensitive elements are placed in a circular crown.

5. Device according to claim 4, **characterised in that** said sensitive element (1) is disk shaped.

6. Device according to any of the previous claims, **characterised in that** said sensitive element (1) is made of a material with a fmite thermal conductivity.

7. Device according to any of the claims from 1 to 5, **characterised in that** said sensitive element (1) comprises a layer of material absorbing the laser radiation, a layer of material that is electrically conducting and a layer of electrically insulating material.

8. Device according to any of the claims from 1 to 5, **characterised in that** said sensitive element (1) comprises a layer of material absorbing the laser radiation and a layer of ceramic material.

9. Device according to any of the previous claims, **characterised in that** said thermosensitive elements are differential thermocouples.

10. Device according to any of the previous claims **characterised in that** the thermosensitive elements of said plurality (2, 3) are electrically independent from each other.

11. Device according to any of the previous claims, **characterised in that** said second plurality (3) of thermosensitive elements is subdivided into four series of electrically independent thermosensitive elements.
